# EUROPEAN PATENT SPECIFICATION

(11) **EP 1 332 309 B1**
(45) Date of publication and mention of the grant of the patent: **20.07.2005**
(21) Application number: 01983007.4
(22) Date of filing: 08.11.2001
(51) Int. Cl.: F16L 21/03

(54) **SEALING RING FOR CONNECTING TWO TELESCOPICALLY INSERTABLE CONCRETE COMPONENTS**
DICHTUNGSRING ZUR VERBINDUNG ZWEIER TELESKOPARTIG EINFÜHRBARER BETONKOMPONENTEN
JOINT D'ETANCHEITE SERVANT A ACCOUPLER DEUX ELEMENTS EN BETON A EMBOITEMENT TELESCOPIQUE

(30) Priority: 10.11.2000 SE 0004110
(43) Date of publication of application: 06.08.2003
(73) Proprietor: Trelleborg Forsheda Building AB, 331 29 Värnamo (SE)
(72) Inventor: CAVKA, Elvir, S-331 41 Värnamo (SE)
(74) Representative: Andersson, Per-Olof
(86) International application number: PCT/SE2001/002466
(87) International publication number: WO 2002/040909

(56) References cited:
- DE-A1- 4 108 107
- DE-A1- 4 134 049
- SE-C2- 513 323
- US-A- 5 566 955

## Description

### Field of the Invention

The present invention relates to a sealing ring for sealing an annular gap between a concrete pipe socket and a concrete pipe spigot end, said sealing ring being adapted to be mounted on a mould ring intended for casting of a concrete pipe comprising a socket so as to be fixed in the socket by said casting whereby it is made in one piece by means of co-extrusion of a soft rubber material and a hard rubber material. Such a sealing ring is known, for instance, from document DE-A-41 34 049.

### Background Art

One problem associated with prior-art sealing rings of this kind, i.e. sealing rings that are intended to be fixed in a concrete pipe socket in connection with the casting thereof, is that the sealing ring moves on the mould ring during casting. Another problem associated with prior-art sealing rings of this kind is that, sometimes, the sealing ring is compressed against the mould ring as a result of the pressure exerted on the sealing ring by the concrete during casting. Such compression may result in the sealing ring assuming an incorrect fixing position in the socket. Another problem found in connection with prior-art sealing rings of this kind is that concrete will penetrate between the sealing ring and the mould ring during casting. In many cases, this concrete will remain stuck to the sealing ring after the form stripping and will, of course, reduce the sealing effect of the sealing ring.

In prior-art sealing rings of this kind, the sealing ring, when being mounted on the mould ring, is stretched out in such a way that it tends to contract after the form stripping, which may lead to the sealing ring coming loose from the socket.

Another problem found when the annular gap that is to be sealed is small and the compression of the sealing ring is great is that fractures may develop in the socket.

### Summary of the Invention

The object of the present invention is to provide a sealing ring which obviates or at least considerably reduces the above problems.

According to the invention, this object is achieved by means of a sealing ring of the kind described characterised in that the soft rubber material has a hardness of 30-40 IRHD and forms a first portion (2), which is intended to abut against the mould ring (9) during said casting and to form an axially outer sealing portion for sealingly abutting against the spigot end (10) during use of the sealing ring (1), that the soft rubber material further forms a radially ᵢnner sealing layer (6), which is intended to abut against the mould ring (9) during said casting and to abut sealingly against the spigot end (10) during use of the sealing ring (1), and
that the hard rubber material forms a second portion (7) located axially inside the first portion (2) of soft rubber material and radially outside the radially inner sealing layer (6), said second portion (7) having an inner cavity (8), admitting the sealing ring (1) to be compressed in the radial direction when the spigot end (10) is inserted into the socket (4).

### Brief Description of the Drawings

The invention will now be described in more detail with reference to the accompanying drawings.
Fig. 1 is a sectional view of an embodiment of the sealing ring according to the invention.
Fig. 2 is a sectional view of the sealing ring according to Fig. 1 as mounted on a mould ring for casting of a concrete pipe socket.
Fig. 3 is a sectional view of the sealing ring according to Figs 1 and 2 as fixed in the concrete pipe socket.
Figs 4-6 are sectional views of different embodiments of the sealing ring according to the invention.

### Description of Preferred Embodiments

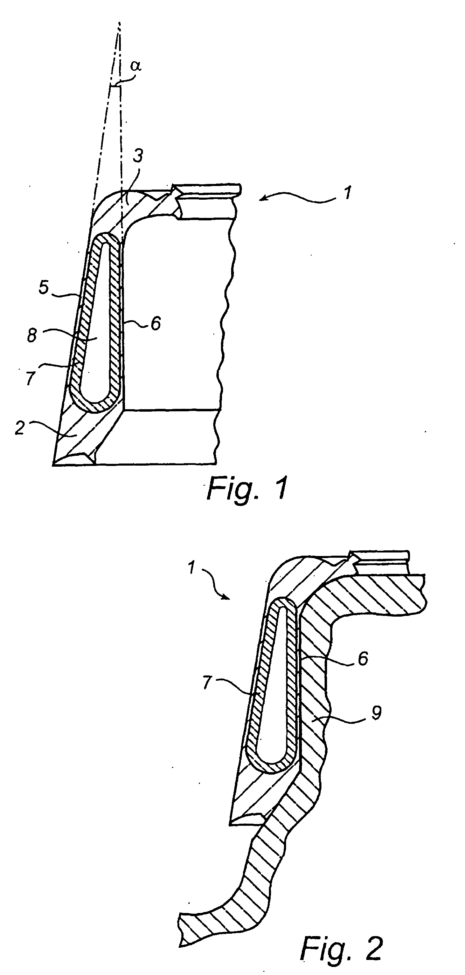

The sealing ring 1 shown in Figs 1-3 is made in one piece by means of co-extrusion of a soft rubber material with a hardness of 30-40 IRHD and a hard rubber material with a hardness of 60-80 IRHD. The soft rubber material and the hard rubber material are thus high-quality rubber materials, which according to various standard specifications may be used as sealing material.

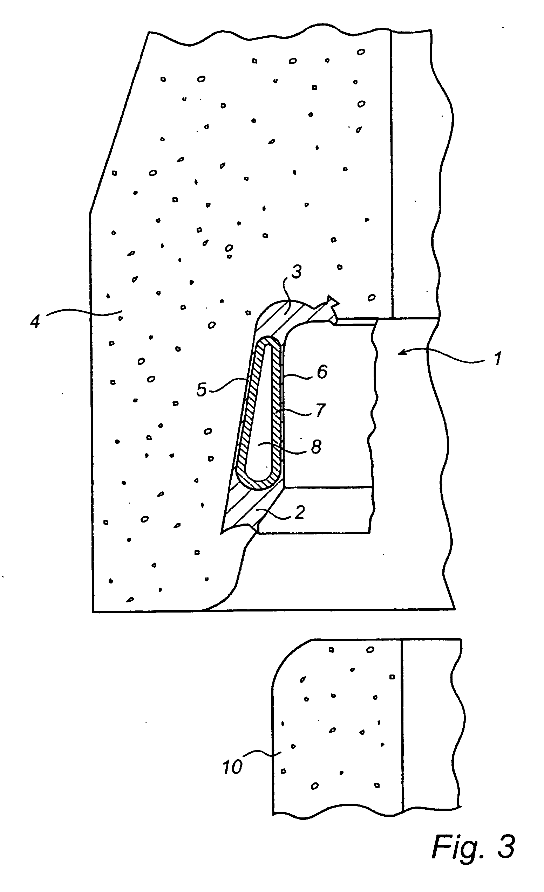

The soft rubber material forms an axially outer sealing portion 2 and an axially inner sealing portion 3. In this connection, 'axially outer' and 'axially inner' refer to the location of the sealing ring 1 in a concrete pipe socket 4 (see Fig. 3). The soft rubber material further forms a radially outer sealing layer 5 and a radially inner sealing layer 6, which interconnect the portions 2 and 3 and which define, between them, a closed annular cavity, which is filled by a ring 7 of the hard rubber material. The ring 7 of hard rubber material is connected to the ring of soft rubber material formed by the portions 2 and 3 and the layers 5 and 6, and defines an inner cavity 8.

The side of the radially outer layer 5 facing radially outward and the side of the radially inner layer 6 facing radially inward form, between them, an angle α and converge axially inward (relative to the socket 4). Thus, the sealing ring 1 has an axially inwardly decreasing thickness across the main part of its axial extension.

The sealing ring shown in Fig. 2 is mounted on a mould ring 9, which constitutes a bottom mould in a mould for casting a concrete pipe comprising a socket (4) (Fig. 3). As shown, the radially inner sealing layer 6 of soft rubber material abuts against the peripheral surface of the mould ring 9, against which surface it is pressed with relatively great force by the ring 7 of hard rubber material. The sealing ring 1 is thereby kept well in place on the mould ring 9 and does not move thereon when concrete is supplied to the mould to cast the concrete pipe.

Fig. 3 shows a portion of the concrete pipe comprising the socket 4 after the form stripping and with the sealing ring 1 fixed in the socket 4. Owing to the ring 7 of hard rubber material, the sealing ring 1 is kept in a fixed position in the socket 4 and, thus, does not change position when a concrete pipe spigot end 10 is inserted into the socket 4. When the spigot end 10 is inserted into the socket 4, the sealing ring 1 is compressed in the radial direction.

Since the sealing ring 1 has an axially inwardly decreasing thickness, the concrete pipe socket 4 will, during casting, get a larger wall thickness in its axially inner portion compared with its axially outer portion. This reduces the risk of cracking in the concrete.

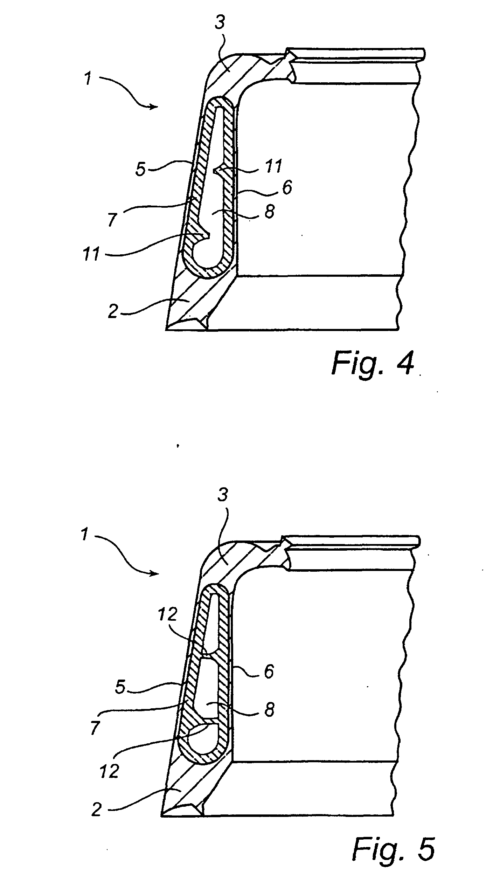

The embodiment shown in Fig. 4 differs from the embodiment shown in Figs 1-3 only by the ring 7 of hard rubber material having two circumferential ribs 11, which extend a distance into the cavity 8 and prevent the sealing ring 1 from being completely compressed when the spigot end 10 is being inserted into the socket 4.

The embodiment shown in Fig. 5 differs from the embodiment shown in Figs 1-3 only by the ring 7 of hard rubber material having two circumferential, radial beams 12, which interconnect the portions of the ring 7 located on either side of the cavity 8, thereby giving the sealing ring 1 increased stability with regard to the radial compression that occurs when the spigot end 10 is inserted into the socket 4.

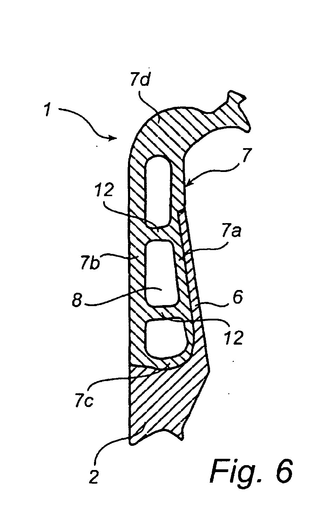

Like the embodiments described above, the embodiment shown in Fig. 6 is made in one piece by means of co-extrusion of a soft and a hard high-quality rubber material.

In this context, the soft rubber material forms only an axially outer sealing portion 2 and a radially inner sealing layer 6 connected thereto. The ring 7 of hard rubber material is connected to the ring of soft rubber material formed of the portion 2 and the layer 6. In the embodiment according to Fig. 6, as well as in the embodiments described above, the ring 7 has an inner cavity 8. This cavity 8 is here defined by a radially inner wall 7a, which connects to the radially inner sealing layer 6, a radially outer wall 7b, which replaces the radially outer layer 5 of the embodiments described above, an axially outer portion 7c, which connects to the axially outer sealing portion 2, and an axially inner portion 7d, which replaces the axially inner portion 3 of the embodiments described above. As in the embodiment according to Fig. 5, the inner cavity 8 is here divided into three small cavities by means of two circumferential radial beams 12, which interconnect the walls 7a and 7b.

In the same manner as in the embodiments described above, the sealing ring 1 according to Fig. 6 has an axially inwardly decreasing thickness across the main part of its axial extension, since, as shown, the side of the radially inner layer 6 facing radially inward and the side of the radially outer wall 7b facing radially outward converge axially inward.

## Claims

1. A sealing ring for sealing an annular gap between a concrete pipe socket (4) and a concrete pipe spigot end (10), said sealing ring (1) being adapted to be mounted on a mould ring (9) intended for casting of a concrete pipe comprising a socket (4) so as to be fixed in the socket by said casting, whereby it is made in one piece by means of co-extrusion of a soft rubber material and a hard rubber material, **characterised in**
**that** the soft rubber material has a hardness of 30-40 IRHD and forms a first portion (2), which is intended to abut against the mould ring (9) during said casting and to form an axially outer sealing portion for sealingly abutting against the spigot end (10) during use of the sealing ring (1), that the soft rubber material further forms a radially inner sealing layer (6), which is intended to abut against the mould ring (9) during said casting and to abut sealingly against the spigot end (10) during use of the sealing ring (1), and
**that** the hard rubber material forms a second portion (7) located axially inside the first portion (2) of soft rubber material and radially outside the radially inner sealing layer (6), said second portion (7) having an inner cavity (8), admitting the sealing ring (1) to be compressed in the radial direction when the spigot end (10) is inserted into the socket (4).

## Patentansprüche

1. Dichtungsring zum Abdichten eines ringförmigen Spalts zwischen einer Betonrohr-Muffe (4) und einem Betonrohr-Einsteckende (10), wobei der Dichtungsring (1) so eingerichtet ist, dass er an einem Formring (9) angebracht wird, der zum Gießen eines Betonrohrs bestimmt ist, das eine Muffe (4) umfasst, um so durch das Gießen in der Muffe fixiert zu werden, wobei er durch Koextrusion eines weichen Gummimaterials und eines harten Gummimaterials aus einem Stück hergestellt wird, **dadurch gekennzeichnet, dass** das weiche Gummimaterial eine Härte von 30-40 IR HD hat und einen ersten Abschnitt (2) bildet, der während des Gießens an dem Formring (9) anliegen und einen axial außenliegenden Dichtungsabschnitt bilden soll, der während des Einsatzes des Dichtungsrings (1) dichtend an dem Einsteckende (10) anliegt, dass das weiche Gummimaterial des Weiteren eine radial innenliegende Dichtungsschicht (6) bildet, die dazu beim Gießen an dem Formring (9) anliegen und beim Einsatz des Dichtungsrings (1) dichtend an dem Einsteckende (10) anliegen soll, und dass das harte Gummimaterial einen zweiten Abschnitt (7) bildet, der sich axial innerhalb des ersten Abschnitts (2) aus weichem Gummimaterial und radial außerhalb der radial innenliegenden Dichtungsschicht (6) befindet, wobei der zweite Abschnitt (7) einen inneren Hohlraum (8) aufweist, der zulässt, dass der Dichtungsring (1) in der radialen Richtung zusammengedrückt wird, wenn das Einsteckende (10) in die Muffe (4) eingeführt wird.

## Revendications

1. Joint d'étanchéité permettant de rendre étanche un espace annulaire situé entre une douille de tuyau en béton (4) et un bout uni de tuyau en béton (10), ledit joint d'étanchéité (1) étant adapté pour être monté sur une bague de moule (9) prévue pour le moulage d'un tuyau en béton comprenant une douille (4) afin d'être fixé dans la douille par ledit moulage, moyennant quoi il est réalisé d'un seul tenant au moyen de la co-extrusion d'un matériau en caoutchouc souple et d'un matériau en caoutchouc dur, **caractérisé en ce que** le matériau en caoutchouc souple a une dureté de 30 - 40 IRHD et forme une première partie (2), qui est prévue pour venir en butée contre la bague de moule (9) pendant ledit moulage et pour former une partie d'étanchéité axialement externe pour venir en butée de manière étanche contre le bout uni (10) pendant l'utilisation du joint d'étanchéité (1), et
**en ce que** le matériau en caoutchouc souple forme en outre une couche d'étanchéité radialement interne (6) qui est prévue pour venir en butée contre la bague de moule (9) pendant ledit moulage et pour venir en butée de manière étanche contre le bout uni (10) pendant l'utilisation du joint d'étanchéité (1), et
**en ce que** le matériau en caoutchouc dur forme une seconde partie (7) située axialement vers l'intérieur de la première partie (2) d'un matériau en caoutchouc souple et radialement à l'extérieur de la couche d'étanchéité radialement interne (6), ladite seconde partie (7) ayant une cavité interne (8) recevant le joint d'étanchéité (1) pour être comprimé dans la direction radiale lorsque le bout uni (10) est inséré dans la douille (4).
